# EUROPEAN PATENT SPECIFICATION

(11) **EP 4 304 129 B1**
(45) Date of publication and mention of the grant of the patent: **26.08.2026**
(21) Application number: 22183495.5
(22) Date of filing: 07.07.2022
(51) Int. Cl.: G06N 20/20, G06N 3/098, G06N 3/045, H04L 9/00

(54) **COMPUTER-IMPLEMENTED METHOD FOR PROVIDING AN ENCRYPTED GLOBAL MODEL TRAINED BY FEDERATED LEARNING, COMPUTER PROGRAM AND PROVIDING SYSTEM**
COMPUTERIMPLEMENTIERTES VERFAHREN ZUR BEREITSTELLUNG EINES DURCH EIN GEMISCHTES LERNEN TRAINIERTEN VERSCHLÜSSELTEN GLOBALEN MODELLS, COMPUTERPROGRAMM UND BEREITSTELLUNGSSYSTEM
PROCÉDÉ MIS EN OEUVRE PAR ORDINATEUR POUR FOURNIR UN MODÈLE GLOBAL CRYPTÉ FORMÉ PAR APPRENTISSAGE FÉDÉRÉ, PROGRAMME INFORMATIQUE ET SYSTÈME DE FOURNITURE

(43) Date of publication of application: 10.01.2024
(73) Proprietor: Siemens Healthineers AG, 91301 Forchheim (DE)
(72) Inventor: Prasad, Srikrishna, 91054 Erlangen (DE)
(74) Representative: Siemens Healthineers Patent Attorneys

(56) References cited:
- EP-A1- 3 461 054
- US-A1- 2020 125 739
- US-A1- 2021 058 229
- US-A1- 2021 409 190

## Description

For processing large amounts of data, e.g. for training a machine learning algorithm, a common approach is to make use of external resources, in particular, cloud computing resources. For example, training data sets can be stored within cloud storage, and a machine learning algorithm can be trained by a cloud computing processor based on the training data sets.

Machine learning techniques have proven to be best, when operated on huge data sets these. Recent days, applications of machine learning are gaining momentum towards personalized medicine, image guided therapy, treatment planning, medical imaging such as tumor, detection, classification, segmentation and annotation. However, centralized data storage raises data privacy issues, which being major concern for hospital data sharing for collaborative research and improving model efficiency and accuracy.

With rapid progress in distributed digital healthcare platforms, federated learning approaches are gaining lot of traction. Federated learning (FL) is an approach to conduct machine learning without centralizing training data in a single place, for reasons of privacy, confidentiality, or data volume. In federated learning, a model is trained collaborative-ly among multiple parties, which keep their training dataset to themselves but participate in a shared federated learning process. The learning process between parties most commonly uses a single aggregator, wherein an aggregator would coordinate the overall process, communicate with the parties, and integrate the results of the training process. However, there are many open security and privacy challenges in conducting federated learning process.

Usage of external resources can be hampered in situations where the resource provider should not have access to the training data, for example due to data privacy regulations. In particular, this is a problem for medical data containing protected health information (an acronym is PHI).

A common approach for processing medical data at external resources is anonymizing or pseudonymizing the medical data before storing and/or processing within the external resources. This approach has the disadvantage that it might not be possible to fully anonymize or pseudonymize the data without losing relevant information. For example, if the medical data is a medical imaging dataset based on a computed tomography or a magnetic resonance imaging, the pixel alone could be used for identifying the respective patient (e.g., by volume rendering the data, reconstruction the face of the patient).

Another possibility is to encrypt the data before storing and/or processing the data within the external resources. However, the encrypting operation and the usage of the machine learning algorithm do not necessarily commute, so that it is not possible to use a machine learning algorithm trained by means of encrypted data (a synonym is "ciphertext") for drawing conclusions about unencrypted data (a synonym is "plaintext").

In federated learning process a single or distributed aggregator collects much information from local parties (models running in local hospital sites) involved in federation after an initiated training cycle. For example, weights, meta information, number of data samples or cohort on which it has been trained are collected by the aggregator. For medical machine learning tasks the collection of data is governed by many regulations such as HIPAA, HITRUST and GDPR. Sending of sensitive quantitative metric, data samples or subjects on which local model was trained at a client (e.g. hospital site) to a global untrusted aggregator in a distributed network (untrusted cloud vendor) may raise a privacy and security issue. In particular, any third party who would use the global model from aggregator can easily identify a data set size or subject samples, in a particular hospital site. Also, it possible for untrusted third-party vendor to discover training population size at a particular hospital site or geography. This can be used by the third party to determine private information about a sample size, population and/or financial gain.

A potential solution for this problem is homomorphically encrypting the training data. Homomorphic encryption is a form of encryption that allows computation on ciphertexts, generating an encrypted result which, when decrypted, matches the result of the operations as if they had been performed on the plaintext. A well-known algorithm having multiplicative homomorphic properties is the RSA (acronym for "Rivest, Shamir, Adleman") public-key encryption algorithm.

However, for decreasing the vulnerability against attacks, a homomorphic encryption scheme should be semantically secure, which in general terms relates to the fact that an adversary should not be able to discover any partial information from a ciphertext. Since RSA is deterministic in its original form, it is not semantically secure. Any attempt to make it proba-bilistic breaks its homomorphic properties (see e.g. C. Fon-taine and F. Galand, "A Survey of Homomorphic Encryption for Nonspecialists", EURASIP J. on Info. Security 013801 (2007), https://doi.org/10.1155/2007/13801) .

The patent application US 2021/409190 A1 describes a method for anonymized generating and proving of processed data. The method is designed for the anonymization of training data, particularly medical data, which is used for training a model. This training occurs within the context of distributed machine learning, and the training data is intended to be encrypted.

The patent application US 2020/0125739 A1 describes a method for secure distributed machine learning. The method involves encrypting a model trained by an agent and then sending it to a fusion server where multiple such models are merged. The fusion server, however, is not able to view the model itself.

The underlying problem of this invention is to provide a method for efficient and data secure training of a global machine learning model based on federated learning. The problem is solved by the subject matter of the independent claims. Advantageous embodiments are described in the dependent claims and in the following specification.

In the following, the solution according to the invention is described with respect to the claimed systems as well as with respect to the claimed methods. Features, advantages or alternative embodiments herein can be assigned to the other corresponding claimed objects and vice versa. In other words, the systems can be improved with features described or claimed in the context of the corresponding method. In this case, the functional features of the methods are embodied by objective units of the systems.

According to a first aspect, the invention relates to a computer-implemented method for providing an encrypted global model trained by federated learning. The method comprises providing, by a central or distributed aggregator, an initial global model to a first client. The method further comprises training of the provided initial global model based on first training data, thereby generating a first client trained model. The first client determines first client data based on the first client trained model, wherein the first client data comprise a matrix of numbers. Furthermore, the first client homomorphically encrypts the first client data based on an encryption key, wherein the encryption key comprises a matrix of numbers, wherein homomorphically encryption is based on a matrix multiplication of the first client data and the encryption key, thereby generating encrypted first client data.

According to the method, the first client sends the encrypted first client data to the central aggregator, wherein the central aggregator determines the encrypted global model based on the encrypted first client data, wherein determining the global model comprises aggregating the encrypted first client data with second encrypted client data. The central aggregator provides the encrypted global model.

The method is configured to provide an encrypted global model trained by federated learning. The encrypted global model is in particular homomorphically encrypted. The encrypted model can be decrypted, especially by a client or the central aggregator, wherein the decrypted global model, also named global model, is achieved. The encrypted model, especially the global model, is trained by a distributed multi-party privacy computing, e.g. by federated learning.

Federated learning is a technique to develop a robust quality shared global model with a central aggregator (e.g. central server) from isolated data among many different clients. In a healthcare application scenario, assume there are K clients (nodes) where each client k holds its respective data Dₖ with nₖ total number of samples. These clients and/or nodes could be healthcare wearable devices, an internet of health things (IoHT) sensor, or a medical institution data warehouse. The federated learning objective is to minimize a loss function F(*ω*) based on a given total data $n = {\sum }_{k = 1}^{K} {n}_{k}$ and trainable machine learning weight vectors $ω ∈ {ℝ}^{d}$ with d parameters. To minimize the loss function F(*ω*) equation (1) can be used: ${min}_{ω ∈ {ℝ}^{d}} F \left(ω\right) = {\sum }_{k = 1}^{K} \frac{{n}_{k}}{n} {F}_{k} \left(ω\right)$

Wherein ${F}_{k} \left(ω\right) = \frac{1}{{n}_{k}} {\sum }_{{x}_{i} ∈ {D}_{k}} {f}_{i} \left(ω\right)$ and *fᵢ(ω) = l(xᵢ, yᵢ, ω*) denotes the loss of the machine learning model made with parameter *ω*.

The federated learning is preferably based on a FedAvg algorithm. The federated learning is in particular based on t communication rounds, wherein each communication round comprises the phases:
(1) The central aggregator initializes an initial global model with initial weights ${ω}_{t}^{g}$, which are shared with a group of clients *Sₜ,* which are picked randomly with a fraction of c **∈** {0, 1}.
(2) After receiving the initial global model with weights ${ω}_{t}^{g}$ from the central aggregator each client *k* ∈ *sₜ* conducts local training steps with epoch E on minibatch *b* ∈ *B* of nₖ private data points. The local model parameters are updated with local learning rate η and optimized by minimizing loss function 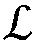 (·)*.*
(3) Once client training is completed, the client k sends back its local model and weights ${ω}_{t + 1}^{k}$ to the server. Finally, after receiving the local model ${ω}_{t + 1}^{k}$ from all selected groups of clients *sₜ,* the aggregator updates the ${ω}_{t + 1}^{g}$ global model by averaging of local model parameters using equation (2): ${ω}_{t + 1}^{g} ← {\sum }_{k = 1}^{K} {α}_{k} \times {ω}_{t + 1}^{k}$ where *αₖ* is a weighting coefficient to indicate the relative influence of each client k on the updating function in the global model, and K is the total clients that participated in the training process. Choosing the proper weighting coefficient *αₖ* in the averaging function can help improve the global model's performance.

The client k, especially first client k=1, can use this algorithm to generate the k client data, especially first client data, wherein the k client data comprise a k client trained model ${ω}_{t + 1}^{k}$. Preferably, the client k (e.g. first client) trains the received initial global model ${ω}_{t}^{g}$ based on the epoch E and minibatch *b* ∈ *B* and generates the client trained model ${ω}_{t + 1}^{k} ,$, e.g. the first client trained model ${ω}_{t + 1}^{1}$. In particular, the client, especially the first client, homomorphically encrypts its client data, e.g. the first client data, based on an encryption key. For example, the client data comprises a vector, matrix or tensor comprising the weights of the client trained model ${ω}_{t + 1}^{k}$ e.g. the ${C}_{k} = \left({\left({ω}_{t + 1}^{k}\right)}_{1}\right.$, $\left.{\left({ω}_{t + 1}^{k}\right)}_{2},…,{\left({ω}_{t + 1}^{k}\right)}_{i}\right)$*,* wherein i denotes the number of weights of the client trained model ${ω}_{t + 1}^{k}$.

The encryption key comprises a matrix of numbers, wherein homomorphically encryption is based on a matrix multiplication of the first client data and the encryption key, thereby generating encrypted first client data. The homomorphically encryption is in particular based on a matrix multiplication of the matrix, vector or tensor of the client data, in particular comprising the weights of the client trained model ${ω}_{t + 1}^{k}$ with the encryption key. The client sends its encrypted first client data to a central aggregator. The central aggregator determines the encrypted global model based on the encrypted first client data, especially based on the generated and/or sent encrypted client data. In particular, the central aggregator determines the encrypted global model based on the encrypted first client data without decrypting the encrypted first client data and/or encrypted client data. The central aggregator provides the encrypted global model.

Determining the global model comprises aggregating the encrypted first client data with second encrypted client data and/or with encrypted client data of further clients, wherein the clients sent their encrypted client data comprising the corresponding trained client model to the central aggregator.

Determining the global model, especially the aggregation, can be based on the following example of a homomorphic federated averaging algorithm, which is described in pseudo code. Herein T denotes the global round, C denotes the number of fractions for each training round, K denotes the number of clients, η denotes the learning rate at a local client, E denotes the number of epochs at a local client, B denotes the local minibatch at a local client and D_{K} denotes the secret key of client K.

Initialize encrypted global model *E(ωₜ^{g})* = 0 for each round t=1,2, 3,....,T.

Do $m ← max \left(C∗K, 1\right)$ ${S}_{t} ← \left(m clients in random order\right)$

For each client k ∈ *Sₜ* $E \left({ω}_{t + 1}^{k}\right) ← Client upatede \left(k,E\left({ω}_{t}^{g}\right)\right)$ $E \left({ω}_{t + 1}^{g}\right) ← {\sum }_{k = 1}^{K} {α}_{k} \times E \left({ω}_{t + 1}^{k}\right)$

Client update $\left(k,E\left({ω}_{t}^{g}\right)\right)$ ${ω}_{k} ← {S}_{{k}_{1}}^{- 1} ∗ E \left({ω}_{t}^{g}\right) ∗ {S}_{{k}_{n}}^{- 1}$

For each local epoch e=1,2,3,...,E do
for each local batch *b* ∈ *B* do ${ω}_{k} ← {ω}_{k} - η ∇ L \left(b; {ω}_{k}\right)$ $E \left({ω}_{k}\right) ← {S}_{{k}_{1}} ∗ E \left({ω}_{t}^{g}\right) ∗ {S}_{{k}_{n}}$
Return local model *E*(*ωₖ*)
Output: $E \left({ω}_{t + 1}^{g}\right)$ a global model at round t+1
Optionally, the method can comprise a step of transmitting the encryption key from the client, especially the first client, to the central aggregator and/or in opposite direction.

In particular, this step of transmitting can be executed in an encrypted way, e.g., by using asymmetric encryption.

In particular, the first client data, especially the matrix of numbers, are configured as plaintext data and/or comprise data, weights and/or metadata of a machine learning algorithm and/or comprise data about the training data. In particular, the first client data comprises training input data for the machine learning algorithm and/or for the training of the local and/or global model. The first client data may comprise respective ground truth data.

In particular, a matrix of numbers is a matrix of (negative and/or positive) integers, of rational numbers or of real numbers. In particular, a matrix of integer numbers can be a matrix of elements of a finite field. In particular, a matrix is a rectangular array of those numbers, arranged in rows and columns. A row vector is a matrix with only one row, and a column vector is a matrix with only one column. The term "vector" refers to either a row vector or a column vector. A number can be interpreted as a matrix with one row and one column. In particular, the first plaintext matrix of numbers comprises at least two rows and/or at least two columns. In particular, the word matrix is also used for and/or understood as vector or tensor.

In particular, the encrypted first data, especially encrypted first client data, comprises a matrix of numbers (also denoted as "first encrypted matrix of numbers"). In particular, the encrypted first client data can be equal to said matrix of numbers. In particular, the first encrypted matrix of numbers is a matrix over the same field as the matrix of the first client data. In particular, the first encrypted matrix of numbers has the same number of rows and/or the same number of columns as the matrix of the first client data.

In particular, the encrypted global model comprises a matrix of numbers (also denoted as "encrypted processed matrix of numbers"). In particular, the encrypted global model is equal to said matrix of numbers.

In particular, the encrypted global model comprises a matrix of numbers (also denoted as "global model matrix of numbers"). In particular, the encrypted global model can be equal to or be fully described by said matrix of numbers. In particular, the matrix of the encrypted global model is a matrix over the same field as the matrix of the encrypted first client data. In particular, the matrix of the encrypted global model has the same number of rows and/or the same number of columns as the matrix of the encrypted first client data.

In particular, the clients, especially the first client, are different entities from central aggregator. In particular, the clients, especially the first client, is spatially separated from the central aggregator. In particular, the central aggregator can be a cloud processing entity or a server processing entity.

The inventors recognized that by using the method according to the invention an initial global model can be trained on the clients and aggregated on a central aggregator, without the central aggregator having the possibility to access plaintext data, information about the training, training sides, sample sides and/or metadata of the training. Furthermore, encryption based on a matrix multiplication is very efficient, in particular, due to the use of an integer encryption key, since integer operations can be executed faster than floating point operations. Furthermore, since machine learning algorithms and models can often be expressed in terms of linear algebra calculations, the encryption and decryption process can efficiently be used for machine learning algorithms.

According to a further aspect of the invention the method comprises receiving, by the central aggregator, encrypted second client data, which are sent by the second client. The encrypted second client data comprise a matrix of numbers. In particular, the second client generates and/or determines the encrypted second client data analogous and/or in a similar was as the first client generates and/or determines the encrypted second client data. Preferably, further clients, e.g. a third client, fourth client, etc., determines client data and provides them to the central aggregator. In particular, the central aggregator provides the initial global model to the second client and/or further clients. The second client, especially the further, trains the provided initial global model based on second or further training data, thereby generating a second or further client trained model. The second client determines second client data based on the second client trained model, wherein the second client data comprise a matrix of numbers. The second client homomorphically encrypts the second client data based on an encryption key, wherein the encryption key comprises a matrix of numbers, wherein homomorphically encryption is based on a matrix multiplication of the second client data and the encryption key, thereby generating encrypted second client data. In a same way the further clients can determine and/or generate encrypted further client data. The second client and/or the further clients send the encrypted second and/or further client data to the central aggregating entity for determining the encrypted global model.

According to the invention, the step determining first client data based on the first client trained model, comprises determining a matrix of model weights as the matrix of numbers. In other words, the first client trains the initial global model and adapts the weights of the model, wherein the client determines as the matrix of numbers comprised by the first client data a matrix comprising the adapted weights. The first client determines for example the weights ${\left({ω}_{t + 1}^{1}\right)}_{d}$ with d=1,2,...,D, wherein the first client determines as the matrix of model weights the vector $A = \left({\left({ω}_{t + 1}^{1}\right)}_{1}, {\left({ω}_{t + 1}^{1}\right)}_{2}, {\left({ω}_{t + 1}^{1}\right)}_{3},…,{\left({ω}_{t + 1}^{1}\right)}_{D}\right)$*.*

Preferably the step determining first client data based on the first client trained model comprises determining a matrix of metadata as the matrix of numbers, wherein the metadata comprise a population size, number of data samples or cohort on which it has been trained. In other words, the first client trains the initial global model and adapts the weights of the model based on its training data, minibatch b and/or local data. The client determines herein an matrix, especially vector, comprising an information about the sample size of the training data and/or of the minibatch, an information about the population size of local data and/or of local training data and/or an information about the cohort of the training. E.g., the first client determines as matrix the vector A^{M}₁₌ (|b|, |Yₓ|), wherein |b| denotes the size of the minibatch b and |Yₓ| denotes the number of data samples manifesting the attribute x.

Particularly, the step determining the encrypted global model based on the encrypted first client data comprises linear combination of the encrypted first client data with encrypted second client data and/or with encrypted further client data. For example, the first client sends the matrix or vector E(A₁) as encrypted first client data and the second client sends the matrix or vector E(A₂) as encrypted second client data, the central aggregator determines the encrypted global model based on *α*₁ ** E(A*₁*) **+** α₂ ***** E(A*₂). In case clients k=1, 2, ..., K send encrypted k client data E(Aₖ) the central aggregator can determine the encrypted global model based on ${\sum }_{k = 1}^{K} {α}_{k} E \left({A}_{k}\right)$.

Optionally, the central aggregator determines an encrypted processed matrix based on a matrix multiplication of the encrypted first client data with the encrypted second client data and/or with encrypted further client data. E.g., the central aggregator determines as the encrypted processed matrix *E(A) **=*** Π*ₖE(Aₖ).* The encrypted processed matrix E(A) is provided, especially to at least one client, wherein the client can decrypt the encrypted processed matrix.

The inventors recognized that by using encrypted data from a second client data can be processed at the central aggregator, without the central aggregator being able to access the plain data.

In particular at least one client, e.g. the first client or second client, receives the encrypted global model from the central aggregator. In other words, the central aggregator sends the encrypted global model to the client. The receiving client decrypts the received encrypted global model based on a matrix multiplication of the encrypted global model and the inverse of the encryption key, thereby generating global model. The decrypted and/or generated global model is provided and/or used by the client, e.g. used for routine application or further training of the global model.

Preferably, the method further comprises generating a random integer matrix and determining a unimodular integer matrix, wherein the matrix product of the unimodular integer matrix and the random integer matrix equals the hermite normal form of the random integer matrix (RIM). Furthermore, the method comprises a step of determining the encryption key, wherein the encryption key comprises the matrix product of the unimodular integer matrix, of an exchange matrix and of the inverse of the unimodular integer matrix. The encryption key is provided to the first client, second client, client and/or central aggregator.

In particular, the matrices, vector and/or tensors of the first client data and/or the second client data are matrices with integer or float numbers. Especially, the first client data, the second client data and/or the further client data are plain text data. Preferably, the first client data, the second client data, the further client data and/or the encryption key are matrices over a finite field.

According to a preferred embodiment of the invention, the method further comprises receiving, by the first client, the encrypted global model from the central aggregator. E.g., the central aggregator sends the encrypted global model to the first client. Herein, the first client decrypts the encrypted global model, thereby generating the global model. The first client verifies the generated global model.

According to a further aspect of the invention the encrypted first client data and/or the encrypted second client data are matrices of numbers, wherein aggregating the encrypted first client data and/or the encrypted second client data comprises at least one of the following operations: inversion of the encrypted first client data and/or the encrypted second client data, scalar multiplication of a number and the encrypted first client data and/or the encrypted second client data, addition or subtraction of the encrypted first client data and/or the encrypted second client data, and matrix multiplication of the encrypted first client data and/or the encrypted second client data.

The inventors recognized that by said operation all linear algebra operations based on the encrypted first client data and/or the encrypted second client data can be created. At the same time, due to the homomorphic encryption, also all linear algebra operations based on the first client data and/or the second client data can be executed by encrypting the data, processing the encrypted client data at the central aggregator, and decrypting the data again.

In particular, the federated learning and/or global model is based on machine learning model and/or can comprise a neural network, a support vector machine, a decision tree and/or a Bayesian network, and/or the machine learning model can be based on k-means clustering, Q-learning, genetic algorithms and/or association rules. In particular, a neural network can be a deep neural network, a convolutional neural network or a convolutional deep neural network. Furthermore, a neural network can be an adversarial network, a deep adversarial network and/or a generative adversarial network.

According to a further aspect of the invention the step of determining the encryption key comprises generating a random integer matrix and determining a unimodular integer matrix, wherein the matrix product of the unimodular integer matrix and the random integer matrix equals the hermite normal form of the random integer matrix. According to this aspect, the encryption key comprises the matrix product of the unimodular integer matrix, of an exchange matrix and of the inverse of the unimodular integer matrix. In particular, the result of this matrix product is an involuntary matrix.

In particular, a random integer matrix is a matrix of integers, wherein each entry is a random integer. In particular, the random distribution of each entry of the random integer matrix is independent from the other entries of the random integer matrix (in other words, the entries of the random integer matrix are statistically independent). In particular, each entry of the random integer matrix is equally distributed.

A unimodular matrix is a square integer matrix having determinant +1 or -1. Equivalently, a unimodular matrix is an integer matrix that is invertible over the integers, in other words, there is an integer matrix that is its inverse.

An exchange matrix is an anti-diagonal matrix with the counter-diagonal entries being 1 and all other entries being 0. For arbitrary fields, "1" is equivalent to the neutral element of the multiplicative operation, and "0" is equivalent to the neutral element of the additive operation. Synonyms for "exchange matrix" are "reversal matrix", "backward identity matrix", and/or "standard involutory permutation matrix".

The inventors recognized that the matrix product of the unimodular integer matrix, of an exchange matrix and of the inverse of the unimodular integer matrix is an involuntary integer matrix. By using encryption keys based on involuntary integer matrices, there is no need for a dedicated calculation of a matrix inverse for the involuntary matrix, so that the effort of encrypting and decrypting is reduced. Furthermore, calculations with integer matrices are computational faster than with floating point numbers. This is of particular relevance if also the plaintext data can be represented as integer matrices (e.g. in the case of image data, wherein each pixel can comprise an integer intensity value).

According to a further aspect, the invention relates to a providing system for providing an encrypted global model trained by federated learning, comprising a first client, preferably a second and/or further clients, and an central aggregator,
- wherein the first client is configured for receiving an initial global model,
- wherein the first encryption entity can be configured for determining an encryption key, the encryption key comprising an integer matrix,
- wherein the first client is configured for training of the provided initial global model based on first training data, thereby generating a first client trained model,
- wherein the first client is configured for determining first client data based on the first client trained model, wherein the first client data comprise a matrix of numbers,
- wherein the first client is configured for homomorphically encrypting the first client data based on an encryption key, wherein the encryption key comprises a matrix of numbers, wherein homomorphically encryption is based on a matrix multiplication of the first client data and the encryption key, thereby generating encrypted first client data,
- wherein the first client is configured for sending the encrypted first client data to a central aggregator,
- wherein the central aggregator is configured for determining the encrypted global model based on the encrypted first client data, wherein determining the global model comprises aggregating the encrypted first client data with encrypted second client data,
- wherein the central aggregator is configured for providing the encrypted global model.

In particular, the providing system is configured for executing the method for providing an encrypted global model trained by federated learning according to the invention and its aspects.

According to a third aspect the invention relates to a computer program comprising instructions which, when the program is executed by a providing system, cause the providing system to carry out the method according to the invention and its aspects.

According to a fourth aspect the invention relates to a computer-readable medium comprising instructions which, when executed by a providing system, cause the providing system to carry out the method according to the invention and its aspects.

The realization of the invention by a computer program product and/or a computer-readable medium has the advantage that already existing providing systems can be easily adopted by software updates in order to work as proposed by the invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The properties, features and advantages of this invention described above, as well as the manner they are achieved, become clearer and more understandable in the light of the following description and embodiments, which will be described in detail in the context of the drawings. This following description does not limit the invention on the contained embodiments. Same components or parts can be labeled with the same reference signs in different figures. In general, the figures are not for scale. In the following:
- Fig. 1: displays a flow chart of an embodiment of the method for providing an encrypted global model trained by federated learning,
- Fig. 2: displays a data flow of a federated learning system,
- Fig. 3: displays a data flow in a first embodiment of an providing system,
- Fig. 4: displays a data flow in a first embodiment of a providing system.

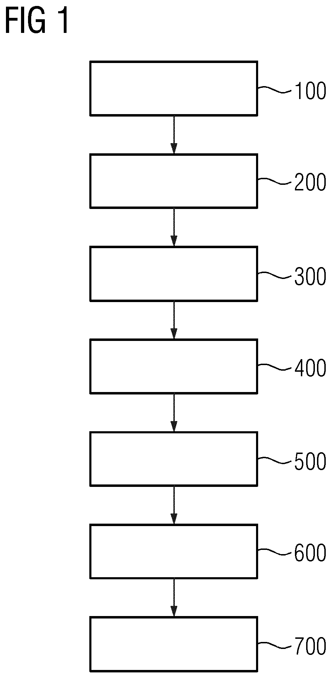

Fig. 1 display flow chart of an embodiment of the method for providing an encrypted global model trained by federated learning according to the invention. The data flow is between clients 1 and a central aggregator 2.

Within the embodiment displayed in Fig. 1, the central aggregator 2 provides in step 100 to the client 1, especially to the first client 1, an initial global model. The initial global model is a machine learning model. Especially, the initial global model is a global model which is already trained, wherein this global model is further trained by using it as initial global model to generate an optimized global model. The machine learning model is configured to carry out a task, especially to analyze and/or process input data based on the global model. E.g., the global model is configured for analyzing medical imaging data or patient data. In particular, the central aggregator 2 provides the initial global model to the clients 1 as encrypted global model, wherein the clients decrypt the provided encrypted global model and use it as provided global model. The decryption of the encrypted global model in the clients 1 is for example achieved by multiplication with an inverse of a encryption key.

In step 200 of the method the first client 1a trains the provide initial global model. Herein the first client 1a trains the global model based on local first training data, e.g., a minibatch B. Also the other clients 1, e.g. second and further clients 1, train the provided initial global model based on local training data. The training of the initial global model at the clients results in and/or generates client trained models, e.g. first client trained model, second client trained model and/or further client trained model.

In step 300 each client 1, especially the first client 1, determine client data, especially first client data. The client 1 determines the client data based on its client trained model. Each client data comprises a matrix of numbers, in particular the client data are configured as the matrix of numbers. The matrix of numbers preferably comprises the weights of the client trained model and/or describes the client trained model.

The client 1 homomorphically encrypts the client data based on an encryption key in step 400. The encryption key is provided to the client 1, e.g., by the central aggregator or a third party. Alternatively, the encryption key is determined and/or generated by the client 1. The encryption key comprises a matrix of numbers or is configured as such a matrix of numbers. The homomorphically encryption is based on a matrix multiplication of the client data and the encryption key, wherein encrypted client data are generated.

In step 500 of the method the clients 1 sent their encrypted client data to a central aggregator 2. The central aggregator 2 collects the encrypted client data, e.g., stores them in a data storage.

In step 600 the central aggregator 2 determines and/or generates an encrypted global model based on the encrypted client data, wherein determining the global model comprises aggregating the provided encrypted client of the clients 1.

The central aggregator 2 provides the encrypted global model in step 700. The central aggregator provides it for example to clients, e.g. as initial global model, or to a third party.

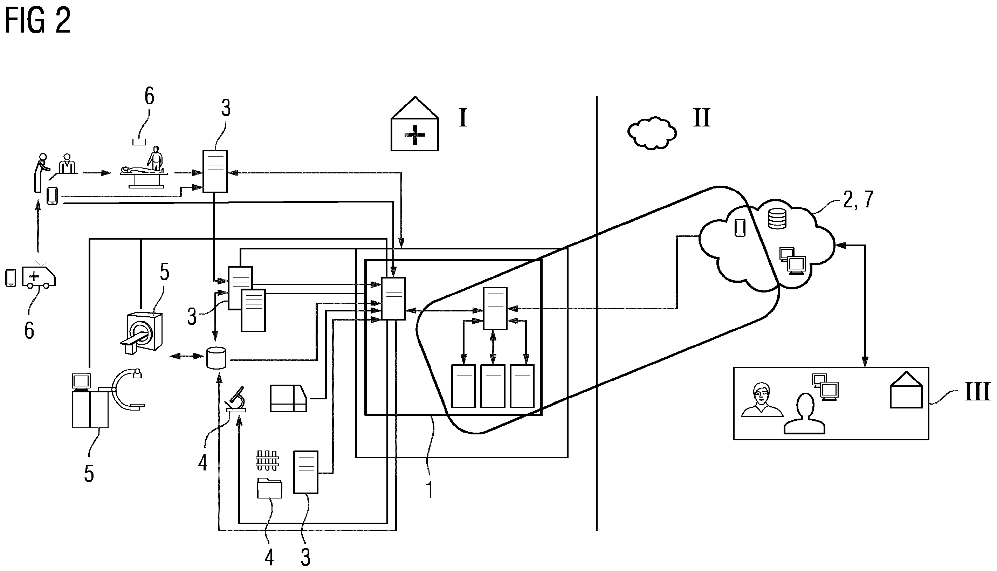

Figure 2 shows an example of a system configured for federated learning, e.g. a providing system. The system can be split in two general parts I, II, wherein I is a network inside the hospital and II is a network outside the hospital, e.g. the central aggregator 2.

At the hospital a hospital I information system 3 collects data from different entities, e.g. form a lab 4, medical imaging devices 5 and/or from a parametric app 6. The hospital network comprises a client 1. The hospital information system 3 provides the collected data to the client 1, which uses the provided data as training data. The client 1 implements and/or supports the method according to the invention a trains at the hospital side a provided initial global method.

The client 1 sends the encrypted first client data to the network outside the hospital II, e.g., to a cloud server 7. The cloud server 7 is configured as global aggregator 2 and determines based on the provided encrypted first client data and on further provided encrypted client data an encrypted global model. The central aggregator 2 provides the encrypted global model to a third party III, e.g., another hospital. A verification 8 of the matrix C3 can be implemented and/or executed by the central aggregator 2 and/or client 1.

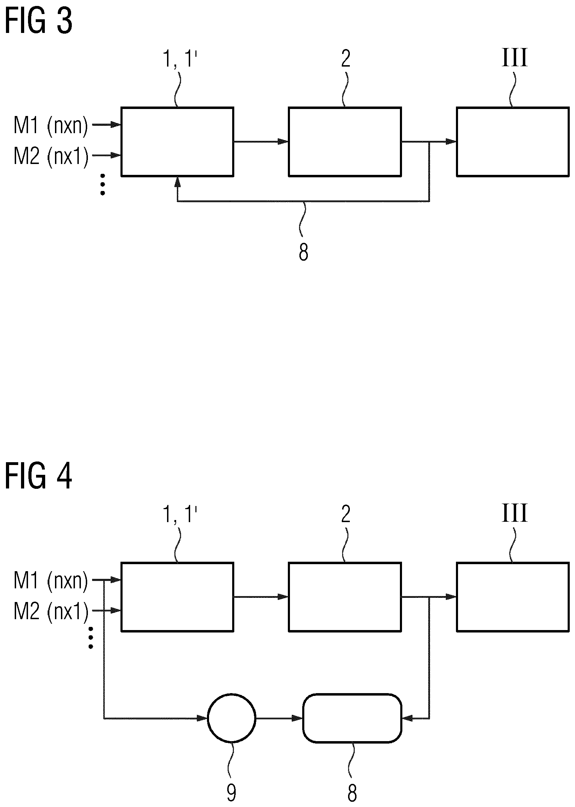

Figure 3 shows a block diagram illustrating a providing system with homomorphic multiplication. The first client 1 provides pairs of weights and metadata, wherein the first client 1 provides the weights as matrix M1 and provides metadata as matrix M2. The client 1 encrypts the data as plain text matrices with secret key A and generates the matrices C1 and C2. At the central aggregator 2 multiplication of the matrices C1, C2 is executed, wherein the matrix C3 is generated. The matrix C3 is provided to a third party 8. The third party 8 decrypts the matrix C3 based on the secret key A.

Figure 4 shows a providing system, which is basically configured as described for figure 3. wherein the system of figure 4 comprises a key generator to generate and/or calculate the secret key A by a key generator 9.

The encryption key A can by calculated by the key generator 9, the client 1 or the central aggregator, based on a random integer matrix RIM and a unimodular integer matrix UIM.

The central aggregator 2, the clients 1, the key generator 9 and/or the providing system can use the following beneficial relations.

In particular, if A denotes the encryption key being an integer n×n-matrix, R denotes the random integer n×n-matrix R, and U denotes the unimodular integer n×n-matrix UIM. U is chosen so that H = U·R, wherein H is an upper triangular (that is, Hᵢⱼ *=* 0 for i > j) matrix with any rows of zeros are located below any other row, wherein for H the leading coefficient (the first nonzero entry from the left, also called the pivot) of a nonzero row is always strictly to the right of the leading coefficient of the row above it and the leading coefficient is is positive, and wherein for H the elements below pivots are zero and elements above pivots are nonnegative and strictly smaller than the pivot. For given R, the matrices H and U can be calculated even in polynomial time, see e.g. R. Kannan and A. Bachem: "Polynomial Algorithms for Computing the Smith and Hermite Normal Forms of an Integer Matrix", SIAM Journal on Computing. 8:4 (1979), doi:10.1137/0208040, pp. 499-507.

The matrix A being the encryption key can then be determined as A = U·I_{F}·U⁻¹, wherein I_{F} is the exchange n×n-matrix with I_{F,ij} *=* 1 for i = n - j + 1 and I_{F,ij} *=* 0 otherwise. So A is in fact an involuntary matrix, since ${A}^{- 1} = {\left(U⋅{I}_{F}⋅{U}^{- 1}\right)}^{- 1} = {U}^{- 1} ⋅ {{I}_{F}}^{- 1} ⋅ U = U ⋅ {I}_{F} ⋅ {U}^{- 1} = A$ since I_{F}·I_{F} = id and so I_{F}⁻¹ = I_{F}. Using involuntary matrices as encryption key has the advantage that the matrix inversion of these matrices does not need to be calculated separately.

In the following, it will be demonstrated how different linear algebra operations can be performed by client 1 and/or the global aggregator 2. In the following, A will denote the encryption key. In particular, A is an involuntary matrix, implying that A⁻¹ = A. The matrices M will denote the matrix of the client data. The encrypted client data, especially the encrypted matrix of the encrypted client data are denoted by C.

### Matrix inversion

Let M be a n×n-matrix, and let A be an involuntary n×n-matrix. The encrypted matrix C can be calculated as C *=* A·D·A⁻¹. Within the central aggregator or the client provided with the encrypted matrix C, the inverse C⁻¹ of the encrypted matrix C can be calculated. The global model comprised by the encrypted global model can then be calculated based on the matrix A as A⁻¹•C⁻¹•A = A⁻¹•(A•D•A⁻¹)⁻¹•A = D⁻¹.

Alternatively, the encrypted matrix C can be calculated as C *=* A·D. The inverse C⁻¹ of the encrypted matrix C can be calculated. The global model and/or the decryption of the encrypted matrix C can then be calculated based on the matrix A as C⁻¹•A *=* (A•D)⁻¹•A *=* D⁻¹.

### Multiplication of square matrices

Let D₁ and D₂ be n×n-matrices (both corresponding to client data), and let A be an involuntary n×n-matrix (corresponding to the encryption key). The encrypted matrices C₁ and C₂ can be calculated as C₁ = A•D₁•A⁻¹ and C₂ = A•D₂•A⁻¹, respectively.

Within the cloud computing environment, the product C₁·C₂ of the encrypted matrices C₁ and C₂ can be calculated. The decryption can then be calculated based on the matrix A as ${A}^{- 1} ⋅ {C}_{1} ⋅ {C}_{2} ⋅ A = {A}^{- 1} ⋅ A ⋅ {D}_{1} ⋅ {A}^{- 1} ⋅ A ⋅ {D}_{2} ⋅ {A}^{- 1} ⋅ A = {D}_{1} ⋅ {D}_{2}$ and is in fact equivalent to the product D₁•D₂.

Alternatively, the encrypted matrices C₁ and C₂ can be calculated as C₁ = A•D₁ and C₂ = D₂•A⁻¹, respectively. The decryption can then still be calculated based on the matrix A as ${A}^{- 1} ⋅ {C}_{1} ⋅ {C}_{2} ⋅ A = {A}^{- 1} ⋅ A ⋅ {D}_{1} ⋅ {D}_{2} ⋅ {A}^{- 1} ⋅ A = {D}_{1} ⋅ {D}_{2}$ and is in fact equivalent to the product D₁•D₂.

### Skalar multiplication

Let D₁ be an m×n-matrix, let d be a scalar number. Furthermore, let A₁ be an involuntary m×m-matrix and let A₂ be an involuntary n×n-matrix (corresponding to the encryption key). The encrypted matrices C₁ can be calculated as C₁ = A₁•D₁•A₂⁻¹.

Within the central aggregator 2, the scalar product dC₁ of the encrypted matrix C₁ and the scalar d can be calculated. The decryption can then be calculated based on the matrices A₁ and A₂ as ${{A}_{1}}^{- 1} ⋅ {dC}_{1} ⋅ {A}_{2} = {{dA}_{1}}^{- 1} ⋅ {A}_{1} ⋅ {D}_{1} ⋅ {{A}_{2}}^{- 1} ⋅ {A}_{2} = {dD}_{1}$ and is in fact equivalent to the product dD₁.

Alternatively, the encrypted matrix C₁ can be calculated as C₁ = A₁•D₁, and the decryption can be calculated based only on the matrix A₁ as ${{A}_{1}}^{- 1} ⋅ {dC}_{1} = {{dA}_{1}}^{- 1} ⋅ {A}_{1} ⋅ {D}_{1} = {dD}_{1}$ and is in fact equivalent to the product dD₁.

### Multiplication of rectangular matrices

Let D₁ be an k×m-matrix, and let D₂ be an m×n-matrix, k, m and n being integers. Furthermore, let A₁ be an involuntary k×k-matrix, A₂ be an involuntary m×m-matrix and A₃ be an involuntary n×n matrix. The encrypted matrices C₁ and C₂ can be calculated as C₁ = A₁•D₁•A₂⁻¹ and C₂ = A₂-D₂-A₃⁻¹, respectively.

Within the central aggregator 2, the product C₁·C₂ of the encrypted matrix C₁ and the encrypted matrix C₂ can be calculated. The decryption can then be calculated based on the matrices A₁ and A₃ as ${{A}_{1}}^{- 1} ⋅ {C}_{1} ⋅ {C}_{2} ⋅ {A}_{3} = {{A}_{1}}^{- 1} ⋅ {A}_{1} ⋅ {D}_{1} ⋅ {{A}_{2}}^{- 1} ⋅ {A}_{2} ⋅ {D}_{2} ⋅ {{A}_{3}}^{- 1} ⋅ {A}_{3} = {D}_{1} ⋅ {D}_{2}$ and is in fact equivalent to the product D₁•D₂.

Alternatively, the encrypted matrices C₁ and C₂ can be calculated as C₁ = A₁•D₁ and C₂ = D₂•A₃⁻¹, respectively. The decryption can then still be calculated based on the matrices A₁ and A₃ as ${{A}_{1}}^{- 1} ⋅ {C}_{1} ⋅ {C}_{2} ⋅ {A}_{3} = {{A}_{1}}^{- 1} ⋅ {A}_{1} ⋅ {D}_{1} ⋅ {D}_{2} ⋅ {{A}_{3}}^{- 1} ⋅ {A}_{3} = {D}_{1} ⋅ {D}_{2}$ and is in fact equivalent to the product D₁•D₂.

### Sum of rectangular matrices

Let D₁ and D₂ be an m×n-matrices, m and n being integers. Furthermore, let A₁ be an involuntary m×m-matrix and let A₂ be an involuntary n×n-matrix. The encrypted matrices C₁ and C₂ can be calculated as C₁ = A₁•D₁•A₂⁻¹ and C₂ = A₁•D₂•A₂⁻¹, respectively.

Within the central aggregator, the sum C₁ + C₂ of the encrypted matrix C₁ and the encrypted matrix C₂ can be calculated based on the matrices A₁ and A₃ as ${{A}_{1}}^{- 1} ⋅ \left({C}_{1}+{C}_{2}\right) ⋅ {A}_{2} = {{A}_{1}}^{- 1} ⋅ {A}_{1} ⋅ {D}_{1} ⋅ {{A}_{2}}^{- 1} ⋅ {A}_{2} + {{A}_{1}}^{- 1} ⋅ {A}_{1} ⋅ {D}_{2} ⋅ {{A}_{2}}^{- 1} ⋅ {A}_{2} = {D}_{1} + {D}_{2}$ and is in fact equivalent to the sum D₁ + D₂.

Wherever not already described explicitly, individual embodiments, or their individual aspects and features, can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

## Claims

1. A computer-implemented method for providing an encrypted global model trained by federated learning, comprising:
- providing (100), by an aggregator (2), an initial global model to a first client (1),
- training (200), by the first client (1), of the provided initial global model based on first training data, thereby generating a first client trained model,
- determining (300), by the first client (1), first client data based on the first client trained model, wherein the first client data comprise a matrix of numbers, wherein the step determining (300) first client data based on the first client trained model comprises determining a matrix of model weights as the matrix of numbers, wherein the model weights are weights of the first client trained model,
- homomorphically encrypting (400), by the first client (1), the first client data based on an encryption key, wherein the encryption key comprises a matrix of numbers, wherein the homomorphical encryption is based on a matrix multiplication of the first client data and the encryption key, thereby generating encrypted first client data,
- sending (500), by the first client (1), the encrypted first client data to the central aggregator (2),
- determining (600), by the central aggregator (2), the encrypted global model based on the encrypted first client data, wherein determining the encrypted global model comprises aggregating the encrypted first client data with encrypted second client data,
- providing (700), by the central aggregator (2), the encrypted global model.

2. Computer-implemented method according to claim 1, further comprising:
- providing, by a central aggregator (2), the initial global model to a second client (1),
- training, by the second client (1), of the provided initial global model based on second training data, thereby generating a second client trained model,
- determining, by the second client (1), second client data based on the second client trained model, wherein the second client data comprise a matrix of numbers,
- homomorphically encrypting, by the second client (1), the second client data based on an encryption key, wherein the encryption key comprises a matrix of numbers, wherein homomorphical encryption is based on a matrix multiplication of the second client data and the encryption key, thereby generating encrypted second client data,
- sending, by the second client (1), the encrypted second client data to the central aggregator (2) for determining (600) the encrypted global model.

3. Computer-implemented method according to one of the previous claims, wherein the step determining (300) first client data based on the first client trained model comprises determining a matrix of metadata as the matrix of numbers, wherein the metadata comprise a population size, number of data samples or cohort on which the model has been trained.

4. Computer-implemented method according to one of the previous claims, wherein the step determining (600) the encrypted global model based on the encrypted first client data comprises a matrix multiplication of the encrypted first client data with encrypted second client data.

5. Computer-implemented method according to one of the previous claims, further comprising:
- receiving, by a client (1), the encrypted global model from the central aggregator (2),
- decrypting, by the client (1), the encrypted global model based on a matrix multiplication of the encrypted global model and the inverse of the encryption key, thereby generating a global model,
- providing, by the client (1), the global model.

6. Computer-implemented method according to one of the previous claims, further comprising:
- generating a random integer matrix,
- determining a unimodular integer matrix, wherein the matrix product of the unimodular integer matrix and the random integer matrix equals the hermite normal form of the random integer matrix (RIM),
- determining the encryption key, wherein the encryption key comprises the matrix product of the unimodular integer matrix, of an exchange matrix and of the inverse of the unimodular integer matrix
- providing the encryption key to the first client, second client, client and/or central aggregator.

7. Computer-implemented method according to one of the previous claims, wherein the first client data and/or the second client data are integer matrices.

8. Computer-implemented method according to one of the previous claims, wherein the first client data and the encryption key are matrices over a finite field.

9. Computer-implemented method according to one of the previous claims, furthermore comprising:
- receiving, by the first client (1), the encrypted global model from the central aggregator (2),
- decrypting, by the first client (1), the encrypted global model, thereby generating the global model,
- verifying, by the first client (1), the global model.

10. A providing system for providing an encrypted global model trained by federated learning, comprising a first client (1) and a central aggregator (2),
- wherein the first client (1) is configured for receiving an initial global model,
- wherein the first client (1) is configured for training of the provided initial global model based on first training data, thereby generating a first client trained model,
- wherein the first client (1) is configured for determining first client data based on the first client trained model, wherein the first client data comprise a matrix of numbers, wherein first client data comprises determining a matrix of model weights as the matrix of numbers, wherein the model weights are weights of the first client trained model,
- wherein the first client (1) is configured for homomorphically encrypting the first client data based on an encryption key, wherein the encryption key comprises a matrix of numbers, wherein homomorphical encryption is based on a matrix multiplication of the first client data and the encryption key, thereby generating encrypted first client data,
- wherein the first client (1) is configured for sending the encrypted first client data to the central aggregator (2),
- wherein the central aggregator (2) is configured for determining the encrypted global model based on the encrypted first client data, wherein determining the global model comprises aggregating the encrypted first client data with encrypted second client data,
- wherein the central aggregator (2) is configured for providing the encrypted global model.

11. A computer program comprising instructions which, when the program is executed by the providing system according to claim 11, cause the providing system to carry out the method according to one of the claims 1 to 9.

12. A computer-readable medium comprising instructions which, when executed by the providing system according to claim 10, cause the providing system to carry out the method according to one of the claims 1 to 9.

## Patentansprüche

1. Computerimplementiertes Verfahren zum Bereitstellen eines verschlüsselten globalen Modells, das durch föderiertes Lernen trainiert wird, umfassend:
- Bereitstellen (100) eines anfänglichen globalen Modells durch einen Aggregator (2) an einen ersten Client (1),
- Trainieren (200) des bereitgestellten anfänglichen globalen Modells durch den ersten Client (1) basierend auf ersten Trainingsdaten, wodurch ein erstes clienttrainiertes Modell erzeugt wird,
- Bestimmen (300) erster Client-Daten durch den ersten Client (1) basierend auf dem ersten clienttrainierten Modell, wobei die ersten Client-Daten eine Zahlenmatrix umfassen, wobei der Schritt des Bestimmens (300) erster Client-Daten basierend auf dem ersten clienttrainierten Modell das Bestimmen einer Matrix von Modellgewichten als Zahlenmatrix umfasst, wobei die Modellgewichte Gewichte des ersten clienttrainierten Modells sind,
- homomorphes Verschlüsseln (400) der ersten Client-Daten durch den ersten Client (1) basierend auf einem Verschlüsselungsschlüssel, wobei der Verschlüsselungsschlüssel eine Zahlenmatrix umfasst, wobei die homomorphe Verschlüsselung auf einer Matrixmultiplikation der ersten Client-Daten und des Verschlüsselungsschlüssels basiert, wodurch verschlüsselte erste Client-Daten erzeugt werden,
- Senden (500) der verschlüsselten ersten Client-Daten durch den ersten Client (1) an den zentralen Aggregator (2),
- Bestimmen (600) des verschlüsselten globalen Modells durch den zentralen Aggregator (2) basierend auf den verschlüsselten ersten Client-Daten, wobei das Bestimmen des verschlüsselten globalen Modells das Aggregieren der verschlüsselten ersten Client-Daten mit verschlüsselten zweiten Client-Daten umfasst,
- Bereitstellen (700) des verschlüsselten globalen Modells durch den zentralen Aggregator (2).

2. Computerimplementiertes Verfahren nach Anspruch 1, ferner umfassend:
- Bereitstellen des anfänglichen globalen Modells durch einen zentralen Aggregator (2) an einen zweiten Client (1),
- Trainieren des bereitgestellten anfänglichen globalen Modells durch den zweiten Client (1) basierend auf zweiten Trainingsdaten, wodurch ein zweites clienttrainiertes Modell erzeugt wird,
- Bestimmen zweiter Client-Daten durch den zweiten Client (1) basierend auf dem zweiten clienttrainierten Modell, wobei die zweiten Client-Daten eine Zahlenmatrix umfassen,
- homomorphes Verschlüsseln der zweiten Client-Daten durch den zweiten Client (1) basierend auf einem Verschlüsselungsschlüssel, wobei der Verschlüsselungsschlüssel eine Zahlenmatrix umfasst, wobei die homomorphe Verschlüsselung auf einer Matrixmultiplikation der zweiten Client-Daten und des Verschlüsselungsschlüssels basiert, wodurch verschlüsselte zweite Client-Daten erzeugt werden,
- Senden der verschlüsselten zweiten Client-Daten durch den zweiten Client (1) an den zentralen Aggregator (2) zum Bestimmen (600) des verschlüsselten globalen Modells.

3. Computerimplementiertes Verfahren nach einem der vorhergehenden Ansprüche, wobei der Schritt des Bestimmens (300) erster Client-Daten basierend auf dem ersten clienttrainierten Modell das Bestimmen einer Matrix von Metadaten als Zahlenmatrix umfasst, wobei die Metadaten eine Populationsgröße, eine Anzahl von Datenproben oder eine Kohorte umfassen, auf der das Modell trainiert worden ist.

4. Computerimplementiertes Verfahren nach einem der vorhergehenden Ansprüche, wobei der Schritt des Bestimmens (600) des verschlüsselten globalen Modells basierend auf den verschlüsselten ersten Client-Daten eine Matrixmultiplikation der verschlüsselten ersten Client-Daten mit verschlüsselten zweiten Client-Daten umfasst.

5. Computerimplementiertes Verfahren nach einem der vorhergehenden Ansprüche, ferner umfassend:
- Empfangen des verschlüsselten globalen Modells vom zentralen Aggregator (2) durch einen Client (1),
- Entschlüsseln des verschlüsselten globalen Modells durch den Client (1) basierend auf einer Matrixmultiplikation des verschlüsselten globalen Modells und der Inversen des Verschlüsselungsschlüssels, wodurch ein globales Modell erzeugt wird;
- Bereitstellen des globalen Modells durch den Client (1).

6. Computerimplementiertes Verfahren nach einem der vorhergehenden Ansprüche, ferner umfassend:
- Erzeugen einer zufälligen Ganzzahlmatrix,
- Bestimmen einer unimodularen Ganzzahlmatrix, wobei das Matrixprodukt der unimodularen Ganzzahlmatrix und der zufälligen Ganzzahlmatrix der Hermite-Normalform der zufälligen Ganzzahlmatrix (RIM) entspricht,
- Bestimmen des Verschlüsselungsschlüssels, wobei der Verschlüsselungsschlüssel das Matrixprodukt der unimodularen Ganzzahlmatrix, einer Austauschmatrix und der Inversen der unimodularen Ganzzahlmatrix umfasst,
- Bereitstellen des Verschlüsselungsschlüssels an den ersten Client, den zweiten Client, den Client und/oder den zentralen Aggregator.

7. Computerimplementiertes Verfahren nach einem der vorhergehenden Ansprüche, wobei die ersten Client-Daten und/oder die zweiten Client-Daten Ganzzahlmatrizen sind.

8. Computerimplementiertes Verfahren nach einem der vorhergehenden Ansprüche, wobei die ersten Client-Daten und der Verschlüsselungsschlüssel Matrizen über einem endlichen Körper sind.

9. Computerimplementiertes Verfahren nach einem der vorhergehenden Ansprüche, ferner umfassend:
- Empfangen des verschlüsselten globalen Modells vom zentralen Aggregator (2) durch den ersten Client (1),
- Entschlüsseln des verschlüsselten globalen Modells durch den ersten Client (1), wodurch das globale Modell erzeugt wird;
- Überprüfen des globalen Modells durch den ersten Client (1).

10. Bereitstellungssystem zum Bereitstellen eines verschlüsselten globalen Modells, das durch föderiertes Lernen trainiert ist, umfassend einen ersten Client (1) und einen zentralen Aggregator (2),
- wobei der erste Client (1) zum Empfangen eines anfänglichen globalen Modells ausgelegt ist,
- wobei der erste Client (1) zum Trainieren des bereitgestellten anfänglichen globalen Modells basierend auf ersten Trainingsdaten ausgelegt ist, wodurch ein erstes clienttrainiertes Modell erzeugt wird,
- wobei der erste Client (1) zum Bestimmen erster Client-Daten basierend auf dem ersten clienttrainierten Modell ausgelegt ist, wobei die ersten Client-Daten eine Zahlenmatrix umfassen, wobei das Bestimmen erster Client-Daten das Bestimmen einer Matrix von Modellgewichten als Zahlenmatrix umfasst, wobei die Modellgewichte Gewichte des ersten clienttrainierten Modells sind,
- wobei der erste Client (1) zum homomorphen Verschlüsseln der ersten Client-Daten basierend auf einem Verschlüsselungsschlüssel ausgelegt ist, wobei der Verschlüsselungsschlüssel eine Zahlenmatrix umfasst, wobei die homomorphe Verschlüsselung auf einer Matrixmultiplikation der ersten Client-Daten und des Verschlüsselungsschlüssels basiert, wodurch verschlüsselte erste Client-Daten erzeugt werden,
- wobei der erste Client (1) zum Senden der verschlüsselten ersten Client-Daten an den zentralen Aggregator (2) ausgelegt ist,
- wobei der zentrale Aggregator (2) zum Bestimmen des verschlüsselten globalen Modells basierend auf den verschlüsselten ersten Client-Daten ausgelegt ist, wobei das Bestimmen des globalen Modells das Aggregieren der verschlüsselten ersten Client-Daten mit verschlüsselten zweiten Client-Daten umfasst,
- wobei der zentrale Aggregator (2) zum Bereitstellen des verschlüsselten globalen Modells ausgelegt ist.

11. Computerprogramm, umfassend Anweisungen, die bei Ausführung des Programms durch das Bereitstellungssystem nach Anspruch 9 bewirken, dass das Bereitstellungssystem das Verfahren nach einem der Ansprüche 1 bis 9 ausführt.

12. Computerlesbares Medium, umfassend Anweisungen, die bei Ausführung durch das Bereitstellungssystem nach Anspruch 10 bewirken, dass das Bereitstellungssystem das Verfahren nach einem der Ansprüche 1 bis 9 ausführt.

## Revendications

1. Un procédé mis en œuvre par ordinateur pour donner un modèle global chiffré entraîné par apprentissage fédéré, comprenant :
- donner (100), par un agrégateur (2), un modèle global initial à un premier client (1),
- entraîner (200), par le premier client (1), le modèle global initial donné sur la base d'une première donnée d'entraînement, en créant ainsi un premier modèle entraîné de client,
- déterminer (300), par le premier client (1), une première donnée de client sur la base du premier modèle entraîné de client, dans lequel la première donnée de client comprend une matrice de nombres, dans lequel le stade de détermination (300) de la première donnée de client sur la base du premier modèle entraîné de client comprend déterminer une matrice de poids de modèle comme la matrice de nombres, dans lequel les poids de modèle sont des poids du premier modèle entraîné de client,
- chiffrer (400) homomorphiquement, par le premier client (1), la première donnée de client sur la base d'une clé de chiffrement, dans lequel la clé de chiffrement comprend une matrice de nombres, dans lequel le chiffrement homomorphique repose sur une multiplication matricielle de la première donnée de client par la clé de chiffrement en créant ainsi une première donnée de client chiffrée,
- envoyer (500), par le premier client (1), la première donnée de client chiffrée à l'agrégateur (2) central,
- déterminer (600), par l'agrégateur (2) central, le modèle global chiffré sur la base de la première donnée de client chiffrée, dans lequel déterminer le modèle global chiffré comprend agréger la première donnée de client chiffrée à une deuxième donnée de client chiffrée,
- donner (700), par l'agrégateur (2) central, le modèle global chiffré.

2. Procédé mis en œuvre par ordinateur suivant la revendication 1, comprenant en outre :
- donner, par un agrégateur (2) central, le modèle global initial à un deuxième client (1),
- entraîner, par le deuxième client (1), le modèle global initial donné sur la base d'une deuxième donnée d'entraînement en créant ainsi un deuxième modèle entraîné de client,
- déterminer, par le deuxième client (1), une deuxième donnée de client sur la base du deuxième modèle entraîné de client, dans lequel la deuxième donnée de client comprend une matrice de nombres,
- chiffrer homomorphiquement, par le deuxième client (1), la deuxième donnée de client sur la base d'une clé de chiffrement, dans lequel la clé de chiffrement comprend une matrice de nombres, dans lequel le chiffrement homomorphique repose sur une multiplication matricielle d'une deuxième donnée de client par la clé de chiffrement, en créant ainsi une deuxième donnée de client chiffrée,
- envoyer, par le deuxième client (1), la deuxième donnée de client chiffrée à l'agrégateur (2) central pour déterminer (600) le modèle global chiffré.

3. Procédé mis en œuvre par ordinateur suivant l'une des revendications précédentes, dans lequel le stade de détermination (300) de la première donnée de client sur la base du premier modèle entraîné de client comprend déterminer une matrice de métadonnées comme matrice de nombres, dans lequel les métadonnées comprennent une dimension de population, un nombre de données, des échantillons ou une cohorte sur lequel le modèle a été entraîné.

4. Procédé mis en œuvre par ordinateur suivant l'une des revendications précédentes, dans lequel le stade de détermination (600) du modèle global chiffré reposant sur la première donnée de client chiffrée comprend une multiplication matricielle de la première donnée de client chiffrée par une deuxième donnée de client chiffrée.

5. Procédé mis en œuvre par ordinateur suivant l'une des revendications précédentes, comprenant en outre :
- recevoir, par un client (1), le modèle global chiffré de l'agrégateur (2) central,
- déchiffrer, par le client (1), le modèle global chiffré sur la base d'une multiplication matricielle du modèle global chiffré par l'inverse de la clé de chiffrement en créant ainsi un modèle global,
- donner, par le client (1), le modèle global.

6. Procédé mis en œuvre par ordinateur suivant l'une des revendications précédentes, comprenant en outre :
- créer une matrice aléatoire de nombres entiers,
- déterminer une matrice unimodulaire de nombres entiers, dans lequel le produit matriciel de la matrice unimodulaire de nombres entiers par la matrice aléatoire de nombres entiers est égal à la forme normale hermitique de la matrice (RIM) de nombres entiers aléatoires,
- déterminer la clé de chiffrement, dans lequel déterminer la clé de chiffrement comprend le produit matriciel de la matrice unimodulaire de nombres entiers, d'une matrice d'échange par l'inverse de la matrice unimodulaire de nombres entiers,
- donner la clé de chiffrement au premier client, au deuxième client, à un client et/ou à l'agrégateur central.

7. Procédé mis en œuvre par ordinateur suivant l'une des revendications précédentes, dans lequel la première donnée de client et/ou la deuxième donnée de client sont des matrices de nombres entiers.

8. Procédé mis en œuvre par ordinateur suivant l'une des revendications précédentes, dans lequel la première donnée de client et la clé de chiffrement sont des matrices sur un champ fini.

9. Procédé mis en œuvre par ordinateur suivant l'une des revendications précédentes, comprenant en outre :
- recevoir, par le premier client (1), de l'agrégateur (2) central le modèle global chiffré,
- déchiffrer, par le premier client (1), le modèle global chiffré, en créant ainsi le modèle global,
- vérifier, par le premier client (1), le modèle global.

10. Un système pour donner un modèle global chiffré entraîné par apprentissage fédéré comprenant un premier client (1) et un agrégateur (2) central,
- dans lequel le premier client (1) est configuré pour recevoir un modèle global initial,
- dans lequel le premier client (1) est configuré pour entraîner le modèle global initial donné sur la base d'une première donnée d'entraînement, en créant ainsi un premier modèle entraîné de client,
- dans lequel le premier client (1) est configuré pour déterminer une première donnée de client reposant sur le premier modèle entraîné de client, dans lequel la première donnée de client comprend une matrice de nombres, dans lequel la première donnée de client comprend déterminer une matrice de poids de modèle comme matrice de nombres, dans lequel les poids du modèle sont des poids du premier modèle entraîné de client,
- dans lequel le premier client (1) est configuré pour chiffrer homomorphiquement la première donnée de client sur la base d'une clé de chiffrement, dans lequel la clé de chiffrement comprend une matrice de nombres, dans lequel le chiffrement homomorphique repose sur une multiplication matricielle de la première donnée de client par la clé de chiffrement, en créant ainsi une première donnée de client chiffrée,
- dans lequel le premier client (1) est configuré pour envoyer la première donnée de client chiffrée à l'agrégateur (2) central,
- dans lequel l'agrégateur (2) central est configuré pour déterminer le modèle global chiffré sur la base de la première donnée de client chiffrée, dans lequel déterminer le modèle global comprend agréger la première donnée de client chiffrée avec la deuxième donnée de client chiffrée,
- dans lequel l'agrégateur (2) central est configuré pour donner le modèle global chiffré.

11. Un programme d'ordinateur comprenant des instructions qui, lorsque le programme est exécuté par le système suivant la revendication 9, fait que le système effectue le procédé suivant l'une des revendications 1 à 9.

12. Un support déchiffrable par ordinateur comprenant des instructions qui, lorsqu'elles sont exécutées par le système suivant la revendication 10, font que le système effectue le procédé suivant l'une des revendications 1 à 9.
